# FASCICULE DE BREVET EUROPEEN

(11) **EP 3 414 208 B1**
(45) Date de publication et mention de la délivrance du brevet: **23.12.2020**
(21) Numéro de dépôt: 16829911.3
(22) Date de dépôt: 28.07.2016
(51) Int. Cl.: C03B 37/04, C03B 37/06, C03B 5/235, C03B 5/237, D04H 3/02, D01D 7/00, D01D 10/02, D02J 13/00, D04H 3/004, D04H 3/12

(54) **PROCÉDÉ ET INSTALLATION DE FABRICATION DE PRODUITS RÉTICULÉS EN FIBRE DE VERRE**
VERFAHREN UND ANLAGE ZUR HERSTELLUNG VERNETZTER GLASFASERMATERIALIEN
METHOD AND FACILITY FOR MANUFACTURING CROSS-LINKED FIBERGLASS MATERIALS

(30) Priorité: 30.07.2015 FR 1557346
(43) Date de publication de la demande: 19.12.2018
(73) Titulaire: L'Air Liquide Société Anonyme pour l'Etude et l'Exploitation des Procédés Georges Claude, 75007 Paris (FR)
(72) Inventeur: JARRY, Luc, 61270 Beaufai (FR); JOUMANI, Youssef, 78121 Crespieres (FR); BEASSE, Grégoire, 75321 Paris CEDEX 07 (FR)
(74) Mandataire: Air Liquide
(86) Numéro de dépôt international: PCT/FR2016/051961
(87) Numéro de publication internationale: WO 2017/017383

(56) Documents cités:
- EP-A2- 1 338 848
- DE-A1-102013 110 283
- FR-A1- 3 000 175
- FR-A1- 3 015 469
- FR-A1- 3 015 635
- FR-A1- 3 015 636
- FR-A1- 3 015 637
- US-A1- 2010 162 772

## Description

La présente invention concerne la fabrication de produits de fibre de verre.

Par « produit de fibre de verre » on comprend des fibres de verre en tant que tels ainsi que des produits les contenant.

Il est connu de fabriquer des fibres de verre par un procédé comprenant le filage de filets de verre issus d'un four de fusion au moyen d'une filière, l'étirage des filets en un ou plusieurs filaments, l'encollage et la collection des filaments et la réticulation des filaments encollés collectés. Ce type de procédé est notamment connu pour la fabrication de produits d'isolation, et notamment d'isolation thermique ou acoustique, ainsi que pour la fabrication de produits de protection contre l'incendie. L'encollage et la réticulation peuvent également intervenir dans la fabrication de tissus non-tissés de fibre de verre.

US-A-2010162772 décrit un procédé pour la fabrication de fibres de verre continues à résistance élevée, ledit procédé comprenant la fusion de matière vitrifiable dans un four de fusion de verre chauffé, le transport du verre fondu au moyen d'un canal de distribution chauffé vers une filière pour le filage du verre fondu en un filet continu. La présente invention a pour but de fournir un procédé de fabrication de produits de fibre de verre optimisé car moins énergivore.

La présente invention a plus particulièrement pour but de fournir un tel procédé optimisé de fabrication sans effet négatif sur la qualité des produits de fibres de verre.

Suivant la présente invention, ceci est notamment réalisé par une meilleure intégration énergétique de la phase de production de verre fondu et la phase de réticulation.

La présente invention a également pour but de fournir une installation adaptée pour la mise en œuvre d'un tel procédé optimisé.

Dans le procédé de fabrication suivant l'invention, du verre fondu est transformé en produit de fibre de verre. Cette transformation comporte les étapes suivantes :
∘ filage du verre fondu en au moins un filet,
∘ étirage du au moins un filet en un ou plusieurs filaments,
∘ collection du ou des filaments,
∘ encollage du ou des filaments, et
∘ réticulation du ou des filaments encollés collectés.

Le verre fondu à être transformé en produit de fibre de verre est produit dans un four de fusion chauffé par combustion d'un combustible avec un oxydant riche. Dans le présent contexte on comprend par « oxydant riche » un gaz ayant une teneur en oxygène de 80%vol à 100%vol. La combustion génère de la chaleur pour la fusion et des fumées. Les fumées générées sont évacuées du four de fusion à une température entre 1000°C et 1600°C.

La combustion avec un oxydant riche chauffe le four avec un rendement élevé.

Il est à noter que le chauffage du four par combustion d'un combustible avec un oxydant riche n'exclut pas que le four soit également chauffé par des moyens supplémentaires, tels que, par exemple, des électrodes.

Suivant l'invention, une première optimisation énergétique du procédé de fabrication est réalisée :
∘ en ce qu'on chauffe de l'air par échange thermique avec des fumées évacuées dans un ensemble d'échange de chaleur avec obtention d'air chaud,
∘ en ce qu'on préchauffe un réactif par échange thermique avec l'air chaud dans l'ensemble d'échange de chaleur avec obtention de réactif préchauffé et d'air tempéré à une température entre 200°C et 500°C, et
∘ en ce qu'on utilise le réactif préchauffé comme réactif de combustion dans le four.

Le réactif est choisi parmi les oxydants riches et les combustibles gazeux. Suivant une forme de réalisation préférée, on préchauffe un oxydant riche avant son utilisation dans le four de fusion. Il est également possible de préchauffer à la fois un oxydant riche et un combustible gazeux avant leur utilisation dans le four de fusion. Dans ce cas, le préchauffage des deux réactifs peut être réalisé en série ou en parallèle.

L'utilisation d'une telle optimisation énergétique dans un procédé de fusion de verre est notamment connue des publications FR-A-3015636, FR-A-3015637, EP-A-1338848, FR-A-3015469, FR-A-3000175 et DE-A-102013110283. Selon FR-A-3015469, l'air tempéré peut être utilisé comme comburant dans un canal de distribution de verre, selon FR-A-3000175 pour la génération d'énergie au moyen d'une turbine et selon DE-A-102013110283 pour le préchauffage de calcin en amont du four de fusion.

Suivant l'invention, une seconde optimisation énergétique du procédé de fabrication est réalisée en ce que de l'air tempéré issu de l'ensemble d'échange de chaleur est mis en œuvre lors de la transformation du verre fondu en produit de fibre de verre, de manière à exploiter la chaleur résiduelle encore présente dans cet air tempéré.

De l'air tempéré issu de l'ensemble d'échange de chaleur est plus particulièrement mis en œuvre lors de la réticulation du ou des filaments collectés encollés et ceci en mettant le ou les filaments encollés collectés en contact avec de l'air tempéré issu de l'ensemble d'échange de chaleur pour promouvoir la réticulation.

Suivant la présente invention, on réalise ainsi une synergie énergétique importante entre la fusion et la transformation du verre fondu en aval de la fusion en ce que de l'air tempéré issu de l'ensemble d'échange de chaleur est mis en œuvre lors de la réticulation des filaments encollés collectés.

De l'air tempéré peut également être mis en œuvre dans une ou plusieurs autres étapes de la transformation du verre fondu, comme décrit dans la demande de brevet non-publiée FR1557344.

La présente invention couvre donc également des procédés combinant l'utilisation d'air tempéré issu de l'échangeur secondaire pour la promotion de la réticulation de filaments encollés collectés, telle que décrite ci-dessus, avec une ou plusieurs autres utilisations d'air tempéré issu de l'ensemble d'échange de chaleur telles que décrites dans cette demande de brevet.

Ainsi, de l'air tempéré peut également être utilisé lors de l'encollage des filaments comme agent de pulvérisation pour un liant d'encollage.

Suivant une forme de réalisation préférée de l'invention, de l'air tempéré peut également être mis en œuvre lors de l'étirage du filet.

Distinction est faite entre :
a) l'étirage mécanique au moyen d'un bobinoir ou organe d'enroulement analogue,
b) l'étirage par frottement gazeux au moyen d'un ou plusieurs courants gazeux d'étirage, et
c) l'étirage centrifuge au moyen d'une centrifugeuse.

L'étirage centrifuge est en pratique industrielle généralement combiné avec un étirage par frottement gazeux.

Selon un premier mode de réalisation de l'étirage par frottement gazeux, également appelé étirage à flamme, le filet de verre est refroidi et se solidifie, avec obtention d'une baguette de verre. La baguette de verre est introduite dans une flamme. L'extrémité de la baguette est ainsi fondue et ensuite étirée par les gaz de combustion de la flamme, de manière à former un ou des filaments de laine de verre. L'étirage à flamme permet de produire des fibres de verre de grande finesse mais présente l'inconvénient de consommer beaucoup d'énergie notamment à cause de la double fusion du verre. L'étirage à flamme est le plus souvent utilisé pour des produits à haute valeur ajoutée.

Selon un deuxième procédé d'étirage par frottement gazeux, légèrement moins énergivore, également appelé étirage à gaz, le filet de verre fondu est directement, c'est-à-dire sans passer par une phase solidifiée, impacté par un ou des courants ou jets de gaz d'étirage tel qu'un courant de vapeur ou de gaz de combustion.

Suivant un procédé connu combinant l'étirage centrifuge et l'étirage par frottement gazeux, le filet de verre fondu est introduit dans une centrifugeuse et est transformé par la force centrifuge en un grand nombre de filaments de verre fondu. Lesdits filaments sont ensuite étirés par un rideau cylindrique de gaz d'étirage qui entoure la centrifugeuse. Ce dernier procédé assure la plus grande partie de la production de fibres de verre pour l'isolation.

Pour que l'étirage par frottement gazeux soit effectif, la viscosité du verre au moment de l'étirage doit être suffisamment basse, ce qui nécessite à son tour que le gaz d'étirage soit très chaud et permet de porter et/ou de maintenir le verre à une température élevée correspondant à une viscosité basse.

Quand le procédé comporte une étape d'étirage par frottement gazeux, de l'air tempéré est avantageusement utilisé pour la production d'un ou plusieurs courants gazeux d'étirage ou pour la production d'une ou plusieurs flammes d'étirage.

La transformation de verre fondu en produit de fibre de verre comporte optionnellement également au moins une des étapes suivantes :
∘ séchage du ou des filaments, et
∘ texturation du ou des filaments.

La texturation des filaments permet d'augmenter le volume et parfois l'élasticité des filaments.

Le séchage des filaments peut notamment être utile afin de fixer le liant d'encollage sur les filaments par évaporation ou volatilisation d'eau ou d'un autre solvant présent dans le liant.

Quand la transformation comporte une étape de séchage du ou des filaments, de l'air tempéré peut être mis en oeuvre comme agent de séchage en contact avec du ou des filaments.

Quand la transformation comporte une étape de texturation, de l'air tempéré peut être utilisé pour générer un courant gazeux de texturation et plus particulièrement un jet turbulent d'air de texturation.

De l'air tempéré issu de l'ensemble d'échange de chaleur peut ainsi être utilisé non seulement lors de l'étape de réticulation, mais également dans une ou plusieurs autres étapes du procédé.

Dans le présent contexte, on comprend par « échange de chaleur » ou « échange thermique », entre deux fluides de températures différentes, le transfert de chaleur ou énergie thermique de l'une des deux fluides (fluide le plus chaude) vers l'autre des deux fluides (fluide le moins chaud) à travers une ou des parois sans que les deux fluides entrent en contact direct ou se mélangent.

Par « échangeur de chaleur » ou « échangeur » on comprend une installation ou un dispositif dans lequel deux fluides de températures différentes circulent dans des enceintes ou circuits distincts sans contact direct ou mélange entre les deux fluides, installations ou dispositifs dans lequel ou lesquels de la chaleur est transmise du fluide le plus chaud au fluide le moins chaud à travers une ou des parois séparant les deux enceintes ou circuits.

Le terme « filament » se réfère à un filet étiré.

Afin d'améliorer l'homogénéité du filet de verre et ainsi l'homogénéité et la qualité du ou des filaments obtenus par étirage du filet, le verre fondu peut être affiné avant le filage.

La fusion et l'affinage du verre peuvent alors avoir lieu dans une même chambre de fusion-affinage du four, la zone d'affinage étant alors située en aval de la zone de fusion et en amont de la sortie de verre fondu dans le sens d'écoulement du verre.

La fusion et l'affinage peuvent également avoir lieu dans des chambres séparées du four, la chambre d'affinage étant située en aval de la chambre de fusion. On considère alors que le four englobe ces deux chambres.

Suivant une forme de réalisation, le verre fondu est extrudé immédiatement à la sortie du four, par exemple à travers une filière située à la sortie de verre fondu du four.

Suivant une forme de réalisation alternative, le verre fondu issu du four est transporté par une canalisation du four, c'est-à-dire d'une sortie de verre fondu du four, vers une filière pour le filage du verre fondu en filet(s).

Dans le présent contexte, le terme « filière » se réfère à tout dispositif de filage permettant de réaliser un ou plusieurs filets de verre fondu à partir d'un bain de verre fondu. La filière peut se présenter sous plusieurs formes de réalisation, telle qu'une plaque métallique percée. La filière peut elle-même être chauffée, par exemple de manière électrique, afin d'éviter que la ou les perforations d'extrusion/de filage soient partiellement ou totalement bouchées par du verre (partiellement) solidifié, voire cristallisé.

L'ensemble d'échange de chaleur comporte avantageusement un échangeur primaire et un échangeur secondaire. On chauffe alors de l'air par échange thermique avec des fumées évacuées du four dans l'échangeur primaire et on préchauffe le réactif dans l'échangeur secondaire par échange thermique avec l'air chaud issu de l'échangeur primaire.

Suivant une forme de réalisation, l'ensemble d'échange de chaleur comporte un échangeur primaire et un échangeur secondaire, de l'air étant chauffé par échange thermique avec des fumées évacuées du four dans l'échangeur primaire avec obtention de l'air chaud à une température entre 500°C et 800°C et le réactif de combustion étant préchauffé dans l'échangeur secondaire par échange thermique avec de l'air chaud issu de l'échangeur primaire.

Il s'est avéré que, grâce à la quantité d'énergie thermique résiduelle de l'air tempéré, la présente invention permet une amélioration significative de l'efficacité énergétique des procédés de fabrication de produits de fibre de verre comportant une étape d'encollage du ou des filaments suivie d'une étape de réticulation du ou des filaments encollés.

La réticulation du ou des filaments encollés a généralement lieu dans une chambre de réticulation, également appelée étuve de réticulation.

Le ou les filaments sont de préférence collectés sous forme d'une nappe sur un convoyeur qui amène le(s) filament(s) collecté(s)/la nappe dans la chambre de réticulation.

Les filaments peuvent être encollés avant leur collection ou après leur collection. On peut ainsi, par exemple, encoller la nappe de filament(s) sur le convoyeur.

Les expressions « filaments encollés collectés » et « filaments collectés encollés » sont synonymiques et n'indiquent pas l'ordre chronologique entre les étapes d'encollage et de collection.

Le convoyeur est de manière utile perméable au gaz. Dans ce cas, de l'air tempéré issu de l'ensemble d'échange de chaleur est avantageusement aspiré à travers la nappe et le convoyeur dans la chambre de réticulation afin de promouvoir la réticulation du ou des filaments.

La nappe réticulée obtenue est ensuite généralement mise en forme et/ou découpée et/ou, revêtue d'une feuille (typiquement sur une face uniquement), etc. de manière à obtenir en produit façonné de fibre de verre, tels que des panneaux ou des rouleaux de fibre de verre.

De tels produits façonnés sont utilisés en tant que produits d'isolation thermique, produits d'isolation acoustique et/ou produits de protection contre l'incendie.

La nappe réticulée peut également être utilisé plus généralement comme tissus non-tissé de fibre de verre.

La présente invention concerne également une installation apte à être utilisé pour la mise en œuvre du procédé de fabrication suivant l'invention.

L'installation comprend un four de fusion de verre et une unité de transformation pour la transformation de verre fondu en un produit de fibre de verre.

Le four de l'installation est destiné à produire du verre fondu à partir de matières solides. Il comporte une sortie de verre fondu, une sortie de fumées et au moins un brûleur pour la combustion d'un combustible avec un oxydant riche, c'est-à-dire un oxydant ayant une teneur en oxygène de 80%vol à 100%vol

Le four comporte généralement plusieurs brûleurs.

Comme déjà indiqué précédemment, le four peut également comporter d'autres dispositifs de chauffage en complément du au moins un brûleur susmentionné.

L'unité de transformation de l'installation comporte un dispositif, appelé filière, pour le filage de verre fondu issu du four de fusion en au moins un filet, la filière étant plus particulièrement fluidiquement reliée à la sortie de verre fondu du four.

L'unité de transformation comporte également un dispositif d'étirage pour l'étirage du au moins un filet issu de la filière en un ou plusieurs filaments, ainsi qu'un collecteur pour la collection du ou des filaments issus du dispositif d'étirage.

Un encolleur pour l'encollage du ou des filaments avec un liant en amont ou après la collection et une chambre de réticulation pour la réticulation du ou des filaments collectés encollés font également partie de l'unité de transformation.

L'unité de transformation comporte optionnellement aussi un ou plusieurs des dispositifs suivants :
∘ un sécheur pour le séchage du ou des filaments, et
∘ une enceinte de texturation du ou des filaments.

Le dispositif d'étirage de l'installation est avantageusement adapté pour la mise en œuvre d'un quelconque des procédés d'étirage mentionné ci-dessus. Ainsi, le dispositif d'étirage peut comporter :
- un ou plusieurs dispositifs d'étirage mécanique, telle que des bobinoirs ou appareils analogues, ou
- un ou plusieurs brûleurs pour l'étirage à flamme, ou
- un ou plusieurs générateurs de courants de gaz pour l'étirage à gaz, sachant que lesdits générateurs de courants de gaz peuvent être des brûleurs générant des courants de gaz de combustion utilisés en tant que courants de gaz d'étirage.

Le dispositif d'étirage peut également comporter une combinaison d'une centrifugeuse pour l'étirage centrifuge avec un ou plusieurs générateurs de courants de gaz pour l'étirage à gaz des filets issus de la centrifugeuse, lesdits générateurs pouvant, comme indiqué ci-dessus, être des brûleurs.

Quand le dispositif d'étirage produit un ou plusieurs filaments continus, le collecteur peut être un bobinoir ou autre dispositif pour l'enroulement du ou des filaments. Il est ainsi possible d'utiliser un bobinoir à la fois en tant que dispositif d'étirage mécanique et collecteur.

Le collecteur peut également être un convoyeur sur lequel le ou les filaments sont collectés. Un tel convoyeur est particulièrement indiqué quand le ou les filets sont étirés en un grand nombre de filaments en particulier en un grand nombre de filaments de faible longueur.

L'installation suivant l'invention est conçue de manière à permettre une efficacité énergétique élevée du four de fusion ainsi qu'une synergie énergétique entre le four de fusion et l'unité de transformation située en aval du four.

A cette fin, l'installation comporte un ensemble d'échange de chaleur pour le chauffage d'air par échange thermique avec des fumées évacuées du four et pour le préchauffage d'un réactif de combustion par échange thermique avec l'air chaud ainsi obtenu. On obtient ainsi du réactif de combustion préchauffé et de l'air tempéré. L'ensemble d'échange de chaleur est fluidiquement relié à une source d'air, à la sortie de fumées du four et à une source de réactif de combustion, cette dernière source étant une source d'oxydant riche ou une source de combustible gazeux. L'ensemble d'échange de chaleur présente une sortie d'air tempéré et une sortie de réactif préchauffé.

La sortie de réactif préchauffé de l'ensemble d'échange de chaleur est fluidiquement reliée à un ou plusieurs brûleurs du four de fusion afin de permettre l'utilisation du réactif préchauffé comme réactif de combustion dans le four de fusion.

Suivant l'invention, la sortie d'air tempéré de l'ensemble d'échange de chaleur est fluidiquement reliée à la chambre de réticulation afin de promouvoir la réticulation du ou des filaments encollés par contact avec de l'air tempéré issu de l'ensemble d'échange de chaleur.

Etant donné le débit et la température de l'air tempéré à la sortie de l'échangeur secondaire, l'utilisation de cet air tempéré pour promouvoir la réticulation des filaments encollés s'est avérée particulièrement efficace et permet ainsi d'améliorer significativement l'efficacité énergétique du procédé global.

Dans le présent contexte, deux éléments sont « fluidiquement reliés » quand ils sont connectés par un conduit ou une canalisation de manière à permettre l'écoulement d'un fluide d'un des deux éléments vers l'autre des deux éléments à travers ce conduit ou cette canalisation.

La source d'air peut, par exemple, être une soufflante d'air.

L'ensemble d'échange thermique permet de préférence au moins le préchauffage d'un oxydant riche, voire le préchauffage d'un oxydant riche et d'un combustible gazeux.

La source d'oxydant riche peut, par exemple, être une unité de séparation des gaz de l'air ou un pipeline ou réservoir d'un oxydant riche liquéfié.

L'ensemble d'échange de chaleur comporte de manière utile un premier échangeur de chaleur dit « échangeur primaire » ou « échangeur de chaleur primaire » pour l'échange thermique entre les fumées évacuées du four et l'air à chauffer, ainsi qu'un second échangeur de chaleur dit « échangeur de chaleur secondaire » ou « échangeur secondaire » pour l'échange thermique entre l'air chaud issu de l'échangeur primaire et le réactif à préchauffer. Dans ce cas, l'échangeur primaire est fluidiquement relié à la source d'air et à la sortie de fumées du four. L'échangeur secondaire est fluidiquement relié à la source de réactif à préchauffer. L'échangeur secondaire présente également la sortie de réactif de combustion préchauffé et la sortie d'air tempéré.

Suivant une forme de réalisation permettant le préchauffage d'un oxydant riche et d'un combustible gazeux, l'ensemble d'échange de chaleur comporte un premier et un deuxième échangeur secondaire, le premier échangeur secondaire étant fluidiquement relié à une source d'oxydant riche et le deuxième échangeur secondaire étant fluidiquement relié à une source d'un combustible gazeux.

Le collecteur comporte de manière utile un convoyeur pour transporter le ou les filaments collectés sous la forme d'une nappe de fibre de verre vers la chambre de réticulation.

Dans ce cas, l'encolleur peut être situé en amont du convoyeur de manière à permettre l'encollage du ou des filaments avant leur transport sous la forme d'une nappe par le convoyeur. L'encolleur peut également être situé au niveau du convoyeur, de manière à permettre l'encollage du ou des filaments présents dans la nappe de fibre de verre sur le convoyeur.

Suivant une forme de réalisation avantageuse, le convoyeur est perméable au gaz. L'étuve comporte alors de préférence un ou des aspirateurs pour aspirer de l'air tempéré issu de l'ensemble d'échange de chaleur à travers la nappe de fibre de verre et le convoyeur à l'intérieur de la chambre de réticulation.

Typiquement, une unité de mise en forme est prévue en aval de la chambre de réticulation pour la production de produits d'isolation acoustique et/ou d'isolation thermique et/ou de protection contre l'incendie à partir de la nappe réticulée ou d'autres produits à base de tissus non-tissés de fibre de verre.

Comme déjà indiqué ci-dessus, l'installation peut comporter deux échangeurs secondaires en amont du brûleur : un échangeur secondaire pour le préchauffage d'un oxydant riche et un échangeur secondaire pour le préchauffage d'un combustible gazeux, le brûleur recevant de l'oxydant riche préchauffé du premier des deux échangeurs secondaires et du combustible gazeux préchauffé du second des deux échangeurs secondaires. Ces deux échangeurs secondaires peuvent être disposés en série ou en parallèle par rapport à l'écoulement de l'air chaud issu de l'échangeur primaire.

Le four peut être un four de fusion/affinage tel que décrit ci-dessus.

La filière peut être située à la sortie de verre fondu du four de fusion. L'installation peut également comporter une canalisation pour le transport de verre fondu de cette sortie de verre fondu vers la filière.

L'invention couvre également une installation telle que décrite ci-dessus qui correspond également à une installation telle que définie dans la demande de brevet non-publiée FR1557344.

Ainsi, la sortie d'air tempéré de l'ensemble d'échange de chaleur peut également être fluidiquement reliée à un ou plusieurs des dispositifs suivants de l'unité de transformation :
- le dispositif d'étirage : pour la réalisation d'une flamme d'étirage ou d'un courant gazeux d'étirage au moyen d'air tempéré issu de l'ensemble d'échange de chaleur ;
- l'encolleur : pour l'utilisation d'air tempéré issu de l'ensemble d'échange de chaleur comme agent de pulvérisation du liant ;
- le sécheur, si présent : pour l'utilisation d'air tempéré issu de l'ensemble d'échange de chaleur comme agent de séchage en contact avec le ou les filaments ;
- l'enceinte de texturation, si présente : pour l'utilisation d'air tempéré issu de l'ensemble d'échange de chaleur comme courant de gaz de texturation, et plus particulièrement en tant que jet turbulent d'air de texturation.

Suivant une forme de réalisation préférée d'une telle installation, le dispositif d'étirage comporte un brûleur d'étirage pour la réalisation d'une flamme d'étirage ou pour la réalisation d'un courant gazeux d'étirage par la combustion d'un combustible avec de l'air tempéré issu de l'ensemble d'échange de chaleur, ledit brûleur d'étirage étant alors fluidiquement relié avec la sortie d'air tempéré de l'ensemble d'échange de chaleur.

Suivant une forme de réalisation particulièrement préférée, le dispositif d'étirage comporte une centrifugeuse pour l'étirage centrifuge du ou des filets, ainsi qu'un brûleur d'étirage pour l'étirage à gaz des filaments issus de la centrifugeuse. Dans ce cas, le brûleur d'étirage est avantageusement annulaire, apte à générer un courant gazeux d'étirage autour de la centrifugeuse et fluidiquement relié à la sortie d'air tempéré de l'ensemble d'échange de chaleur pour la fourniture d'air tempéré comme comburant au brûleur d'étirage.

L'installation suivant l'invention comporte de manière utile une hotte entourant le dispositif d'étirage. Cette hotte peut également entourer l'encolleur et/ou le sécheur. Quand l'installation est destinée à produire un grand nombre de filaments courts, la hotte permet d'éviter ou de limiter l'envol de filaments pendant le fonctionnement de l'installation. La hotte permet aussi, plus généralement, de mieux contrôler les conditions d'étirage, voire d'encollage et/ou de séchage.

Quand l'installation est destinée à produire un grand nombre de filaments courts, le collecteur est de préférence situé en dessous ou en bas de la hotte.

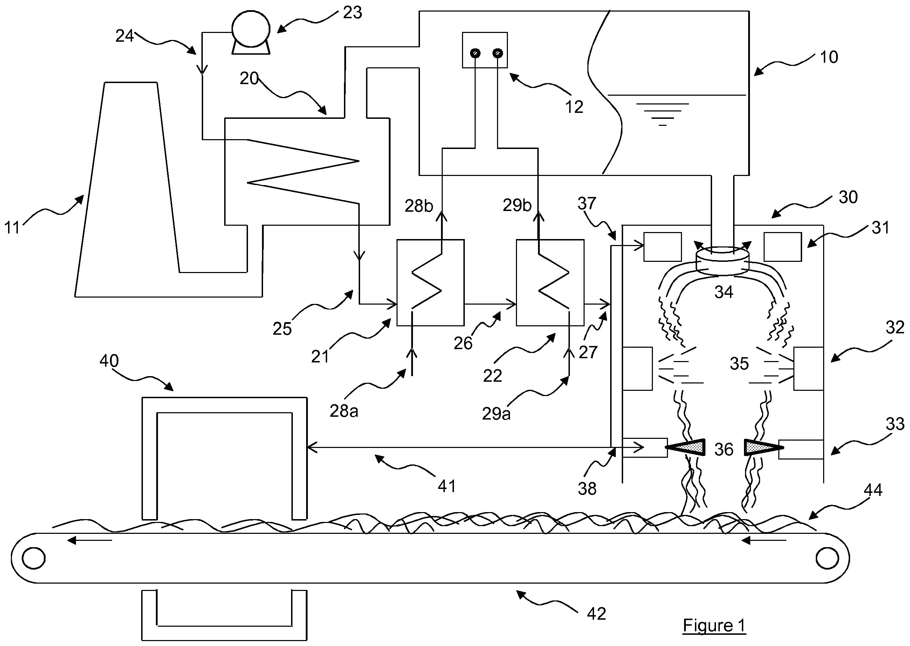

L'installation suivant l'invention peut être une installation pour la production de tissus non-tissés, textiles ou de renforcement, ou encore de produits d'isolation acoustique et/ou d'isolation thermique et/ou de protection contre l'incendie
à la figure 1 qui est une représentation schématique d'un procédé et d'une installation pour la fabrication d'une nappe d'isolation thermique/d'isolation acoustique et/ou de protection contre l'incendie.

L'installation illustrée dans la figure 1 comporte un four de fusion de verre 10 chauffé par un nombre de brûleurs 12 (un seul brûleur est montré dans la figure 1). A cette fin, de l'oxydant riche 28a, typiquement un gaz contenant entre 95%vol et 100%vol d'oxygène, et un combustible gazeux 29a, tel que le gaz naturel, sont fournis auxdits brûleurs 12.

Les fumées ou gaz de combustion générés par la combustion du combustible 29a avec l'oxydant riche 28a sont évacués du four de fusion 10 et introduits dans un échangeur primaire 20 afin de chauffer de l'air comprimé 24 fourni par le compresseur 23. En aval de l'échangeur primaire 20, les fumées sont évacuées à travers la cheminée 11, typiquement après avoir subi un traitement d'élimination de polluants. L'air chaud 25 issu de l'échangeur primaire 20 est introduit dans un premier échangeur secondaire 21 pour le préchauffage de l'oxydant riche 28a et ensuite, sous forme d'air partiellement tempéré 26 dans un deuxième échangeur secondaire 22 pour le préchauffage du combustible gazeux 29a. L'oxydant riche préchauffé 28b issu du premier échangeur secondaire 21 et le combustible gazeux préchauffé 29b issu du deuxième échangeur secondaire 22 sont fournis aux brûleurs 12 comme réactifs de combustion.

Ceci permet une première économie d'énergie très importante dans le procédé de fabrication suivant l'invention.

Le verre fondu issu du four de fusion 10 est introduit sous forme de filet de verre fondu dans une centrifugeuse 34 et les filaments issus de la centrifugeuse 34 sont étirés au moyen d'un courant annulaire de gaz d'étirage généré par le brûleur d'étirage en forme de couronne 31.

Les filaments issus de cet ensemble d'étirage sont encollés par les pulvérisateurs 32 de liant 35 et ensuite séchés par des jets d'agent gazeux de séchage 36 injectés par les sécheurs 33.

Les étapes d'étirage, d'encollage et de séchage sont effectuées dans un environnement contrôlé à l'intérieur d'une hotte 30.

Les filaments encollés séchés sont collectés sous forme d'une nappe 44 de filaments par un convoyeur 42 en bas de la hotte 30.

Le convoyeur 42 amène la nappe 44 vers une étuve de réticulation 40 dans laquelle les filaments encollés sont réticulés sous l'effet de chaleur et ainsi de lier les filaments entre eux. En aval de l'étuve 40, la nappe rigide, semi-rigide ou souple est mise en forme et emballée.

Suivant l'invention, la chaleur résiduelle présente dans l'air tempéré 27 issu des échangeurs secondaires 21, 22 est exploitée afin d'améliorer l'efficacité énergétique du procédé de transformation en aval du four de fusion 10.

Ainsi, une partie 41 de l'air tempéré 27 est introduite dans l'étuve de réticulation et aspirée à travers la nappe 44 à l'intérieur de l'étuve afin de promouvoir la réticulation des filaments dans la nappe 44.

Une autre partie 38 de l'air tempéré 27 est utilisé comme gaz de séchage 36 par les sécheurs 33, la chaleur résiduelle de l'air tempéré 27 permettant d'accélérer le séchage des filaments.

Dans la forme de réalisation illustrée, une dernière partie 37 non-négligeable de l'air tempéré 27 est introduit comme comburant dans le brûleur d'étirage 31 afin de générer le courant de gaz d'étirage de manière plus efficace.

Les avantages de la présente invention seront mieux compris à la lumière de l'exemple suivant.

Le four de fusion produit 100 tpd de fibre d'isolation à partir de 5 MW de puissance thermique. Un appoint en énergie électrique de l'ordre 1 à 5 MWe peut être nécessaire selon les conditions de production. Les fumées de combustion sortent à 1350°C et peuvent être refroidis par dilution pour atteindre une témpérature de 1200°C à l'entrée de l'échangeur primaire. Les 500 Nm³/h de gaz naturel (95% Méthane, 2% Butane, 2% Propane et 1% CO2) sont préchauffés à 450°C. Les 1000 Nm³/h d'oxygène sont préchauffés à 550°C. Pour préchauffer ces gaz, près de 4000 Nm³/h d'air sont nécessaires. Chauffés à 650°C dans l'échangeur primaire, l'air est refroidi à 400°C à la sortie des échangeurs secondaires.

Cet air qui a une valeur énergétique 530 kW est ensuite acheminé dans une conduite de préférence en acier Inoxydable vers la chambre de réticulation. Grâce à cet air chaud, la quantité de combustible est réduite de manière significative (10%). Un complément d'air frais peut être apporté en partie aval de la chambre pour un séchage plus poussé.

## Revendications

1. Procédé de fabrication d'un produit de fibre de verre dans lequel du verre fondu est transformé en produit de fibre de verre par :
∘ filage du verre fondu en au moins un filet,
∘ étirage du au moins un filet en un ou plusieurs filaments,
∘ collection du ou des filaments,
∘ encollage du ou des filaments avant ou après leur collection et
∘ réticulation du ou des filaments collectés encollés,
procédé dans lequel le verre fondu est produit dans un four de fusion (10) chauffé par combustion d'un combustible (28a, 28b) avec un oxydant riche (29a, 29b) ayant une teneur en oxygène de 80%vol à 100%vol, avec génération de chaleur et des fumées, lesdites fumées générées étant évacuées du four de fusion (10) à une température entre 1000°C et 1600°C,
le procédé étant **caractérisé en ce que** :
∘ on chauffe de l'air (24) par échange thermique avec des fumées évacuées dans un ensemble d'échange de chaleur (20, 21, 22) avec obtention d'air chaud (25),
∘ on préchauffe un réactif (28a, 29a) choisi parmi les oxydants riches (29a) et les combustibles gazeux (28a) par échange thermique avec l'air chaud (25) dans l'ensemble d'échange de chaleur (20, 21, 22) avec obtention de réactif préchauffé (28b, 29b) et d'air tempéré (27) à une température entre 200°C et 500°C,
∘ on utilise le réactif préchauffé (28b, 29b) comme réactif de combustion dans le four (10),
∘ on utilise de l'air tempéré (27) issu de l'ensemble d'échange de chaleur (20, 21, 22) lors de la réticulation du ou des filaments collectés encollés en mettant le ou les filaments encollés collectés en contact avec de l'air tempéré (27) issu de l'ensemble d'échange de chaleur (20, 21, 22) pour promouvoir la réticulation.

2. Procédé suivant la revendication 1, dans lequel l'ensemble d'échange de chaleur comporte un échangeur primaire (20) et un échangeur secondaire (21, 22), de l'air (24) étant chauffé par échange thermique avec des fumées évacuées du four (10) dans l'échangeur primaire (20) avec obtention de l'air chaud (25) à une température entre 500°C et 800°C et le réactif de combustion (28a, 29a) est préchauffé dans l'échangeur secondaire (21, 22) par échange thermique avec de l'air chaud (25) issu de échangeur primaire (20).

3. Procédé suivant la revendication 1 ou 2, dans lequel la réticulation a lieu dans une chambre de réticulation.

4. Procédé suivant la revendication 3, dans lequel le ou les filaments sont collectés sous forme d'une nappe (44) sur un convoyeur (42) qui amène les filaments collectés dans la chambre de réticulation (40).

5. Procédé suivant la revendication 4, dans lequel les filaments sont encollés avant leur collection.

6. Procédé suivant la revendication 4, dans lequel les filaments sont encollés après leur collection.

7. Procédé suivant l'une des revendications 4 à 6, dans lequel le convoyeur (42) est perméable au gaz, et de l'air tempéré (27) issu de l'échangeur secondaire (21, 22) est aspiré à travers la nappe (44) et le convoyeur (42) dans la chambre de réticulation (40).

8. Procédé suivant l'une des revendications 1 à 7, dans lequel le produit de fibre de verre est un tissu non-tissé ou un produit d'isolation acoustique et/ou d'isolation thermique et/ou de protection contre l'incendie.

9. Installation comprenant un four de fusion (10) de verre et une unité de transformation pour la transformation de verre fondu en un produit de fibre de verre :
∘ le four de fusion (10) comportant une sortie de verre fondu, une sortie de fumées et au moins un brûleur (12) pour la combustion d'un combustible (29a, 29b) avec un oxydant riche (28a, 28b) ayant une teneur en oxygène de 80%vol à 100%vol ;
∘ l'unité de transformation comportant :
▪ une filière pour le filage de verre fondu issu du four de fusion (10) en au moins un filet, ladite filière étant fluidiquement reliée à la sortie de verre fondu du four (10);
▪ un dispositif d'étirage (31, 34) pour l'étirage d'au moins un filet issu de la filière en un ou plusieurs filaments ;
▪ un collecteur pour la collection du ou des filaments issus du dispositif d'étirage (31, 34);
▪ un encolleur (32) pour l'encollage du ou des filaments avec un liant (35) en amont ou après la collection, et
▪ une chambre de réticulation (40) pour la réticulation du ou des filaments collectés encollés ;
l'installation étant **caractérisée en ce que** :
∘ elle comporte un ensemble d'échange de chaleur (20, 21, 22) pour le chauffage d'air (24) par échange thermique avec des fumées évacuées du four (10) et pour le préchauffage d'un réactif de combustion (28a, 29a) par échange thermique avec l'air chaud (25) avec obtention de réactif de combustion préchauffé (28b, 29b) et d'air tempéré (27), l'ensemble d'échange de chaleur (20, 21, 22) étant fluidiquement relié à une source d'air (23), à la sortie de fumées du four et à une source d'un réactif de combustion (28a, 29a) choisi entre de l'oxydant riche (28a) et du combustible gazeux (29a),
∘ l'ensemble d'échange de chaleur (20, 21, 22) présentant une sortie de réactif de combustion préchauffé (28b, 29b) fluidiquement reliée au brûleur (12) du four de fusion (10) ainsi qu'une sortie d'air tempéré (27) fluidiquement reliée à la chambre de réticulation afin de promouvoir la réticulation du ou des filaments encollés par contact avec de l'air tempéré (27) issu de l'ensemble d'échange de chaleur (20, 21, 22).

10. Installation suivant la revendication 9, dans laquelle l'ensemble d'échange de chaleur (20, 21, 22) comporte un échangeur primaire (20) pour l'échange thermique entre les fumées évacuées du four (10) et l'air (24) et un échangeur secondaire (21, 22) pour l'échange thermique entre l'air chauffé (25) issu de l'échangeur primaire (20) et le réactif de combustion (28a, 29a).

11. Installation suivant la revendication 9 ou 10, dans laquelle le collecteur comporte un convoyeur (42) pour transporter le ou les filaments collectés sous la forme d'une nappe de fibre de verre (44) vers la chambre de réticulation (40).

12. Installation suivant la revendication 11, dans laquelle l'encolleur (32) est situé en amont du convoyeur (42) de manière à permettre l'encollage du ou des filaments avant leur transport sous la forme d'une nappe (44) par le convoyeur (42).

13. Installation suivant l'une quelconque des revendications 9 à 12, dans laquelle le convoyeur (42) est perméable au gaz et dans laquelle la chambre de réticulation (40) comporte un ou des aspirateurs pour aspirer de l'air tempéré (27) issu de l'ensemble d'échange de chaleur (20, 21, 22) à travers la nappe de fibre de verre (44) et le convoyeur (42) à l'intérieur de la chambre de réticulation (40).

14. Installation suivant l'une quelconque des revendications 9 à 12 comportant une unité de mise en forme en aval de la chambre de réticulation (40) pour la production de produits d'isolation acoustique et/ou d'isolation thermique et/ou de protection contre l'incendie à partir de la nappe réticulée (44).

## Patentansprüche

1. Verfahren zur Herstellung eines Glasfaserprodukts, bei dem geschmolzenes Glas in ein Glasfaserprodukt verwandelt durch:
∘ Spinnen des geschmolzenen Glases in mindestens einen Faden,
∘ Ziehen des mindestens einen Fadens in ein oder mehrere Filamente,
∘ Sammeln des oder der Filamente,
∘ Verkleben des oder der Filamente vor oder nach ihrem Sammeln und
∘ Vernetzen des oder der verklebten gesammelten Filamente,
Verfahren, bei dem das geschmolzene Glas in einem Schmelzofen (10) durch Verbrennung eines Brennstoffs (28a, 28b) mit einem reichen Oxidationsmittel (29a, 29b), der einen Sauerstoffgehalt von 80 Vol.-% bis 100 Vol.-% aufweist, unter Erzeugung von Hitze und Rauch hergestellt wird, wobei der erzeugte Rauch bei einer Temperatur zwischen 1000 °C und 1600 °C aus dem Schmelzofen (10) evakuiert werden,
wobei das Verfahren **dadurch gekennzeichnet ist, dass**:
∘ Luft (24) durch Wärmeaustausch mit evakuiertem Rauch in einer Wärmeaustauschanordnung (20, 21, 22) unter Erhalt von warmer Luft (25) erwärmt wird,
∘ ein Reaktionsmittel (28a, 29a), das aus den reichen Oxidationsmitteln (29a) und den gasförmigen Brennstoffen (28a) ausgewählt wird, durch Wärmeaustausch mit der warmen Luft (25) in der Wärmeaustauschanordnung (20, 21, 22) unter Erhalt von vorgewärmtem Reaktionsmittel (28b, 29b) und temperierter Luft (27) bei einer Temperatur zwischen 200 °C und 500 °C vorgewärmt wird,
∘ das vorgewärmte Reaktionsmittel (28b, 29b) als Verbrennungsreaktionsmittel im Ofen (10) verwendet wird,
∘ die aus der Wärmeaustauschanordnung (20, 21, 22) stammende temperierte Luft (27) beim Vernetzen des oder der verklebten gesammelten Filamente verwendet wird, indem das oder die verklebten gesammelten Filamente mit der aus der Wärmeaustauschanordnung (20, 21, 22) stammenden temperierten Luft (27) in Kontakt gebracht wird bzw. werden, um das Vernetzen zu fördern.

2. Verfahren nach Anspruch 1, wobei die Wärmeaustauschanordnung einen Primäraustauscher (20) und einen Sekundäraustauscher (21, 22) umfasst, wobei Luft (24) durch Wärmeaustausch mit aus dem Ofen (10) evakuiertem Rauch im Primäraustauscher (20) unter Erhalt von warmer Luft (25) bei einer Temperatur zwischen 500 °C und 800 °C erwärmt wird, und das Verbrennungsreaktionsmittel (28a, 29a) im Sekundäraustauscher (21, 22) durch Wärmeaustausch mit der aus dem Primäraustauscher (20) stammenden warmen Luft (25) vorgewärmt wird.

3. Verfahren nach einem der Ansprüche 1 oder 2, wobei das Vernetzen in einer Vernetzungskammer stattfindet.

4. Verfahren nach Anspruch 3, wobei das oder die Filamente in Form einer Lage (44) auf einem Förderband (42) gesammelt werden, das die gesammelten Filamente in die Vernetzungskammer (40) führt.

5. Verfahren nach Anspruch 4, wobei die Filamente vor ihrem Sammeln verklebt werden.

6. Verfahren nach Anspruch 4, wobei die Filamente nach ihrem Sammeln verklebt werden.

7. Verfahren nach einem der Ansprüche 4 bis 6, wobei das Förderband (42) gasdurchlässig ist und aus dem Sekundäraustauscher (21, 22) stammende temperierte Luft (27) durch die Lage (44) und das Förderband (42) hindurch in die Vernetzungskammer (40) angesaugt wird.

8. Verfahren nach einem der Ansprüche 1 bis 7, wobei das Glasfaserprodukt ein Vliesstoff oder eine schallisolierendes und/oder wärmeisolierendes und/oder feuerbeständiges Produkt ist.

9. Anlage, umfassend einen Schmelzofen (10) für Glas und eine Verwandlungseinheit zur Verwandlung von geschmolzenem Glas in ein Glasfaserprodukt:
∘ wobei der Schmelzofen (10) einen Ausgang für geschmolzenes Glas umfasst, einen Rauchausgang und mindestens einen Brenner (12) für die Verbrennung eines Brennstoffs (29a, 29b) mit einem reichen Oxidationsmittel (28a, 28b), der einen Sauerstoffgehalt von 80 Vol.-% bis 100 Vol.-% aufweist, umfasst;
∘ wobei die Verwandlungseinheit umfasst:
• eine Spinndüse für das Spinnen von aus dem Schmelzofen (10) stammendem geschmolzenem Glas in mindestens einen Faden, wobei die Spinndüse mit dem Ausgang für geschmolzenes Glas des Ofens (10) fluidisch verbunden ist;
• eine Ziehvorrichtung (31, 34) für das Ziehen mindestens eines aus dem Teilbereich stammenden Fadens in ein oder mehrere Filamente;
• einen Sammler für das Sammeln des oder der aus der Ziehvorrichtung (31, 34) stammenden Filamente;
• einen Verkleber (32) für das Verkleben des oder der Filamente mit einem Bindemittel (35) stromaufwärts oder nach dem Sammeln, und
• eine Vernetzungskammer (40) für das Vernetzen des oder der verklebten gesammelten Filamente;
wobei die Anlage **dadurch gekennzeichnet ist, dass**:
∘ sie eine Wärmeaustauschanordnung (20, 21, 22) für das Erwärmen von Luft (24) durch Wärmeaustausch mit aus dem Ofen (10) evakuiertem Rauch umfasst und für das Vorwärmen eines Verbrennungsreaktionsmittels (28a, 29a) durch Wärmeaustausch mit warmer Luft (25) unter Erhalt von vorgewärmten Verbrennungsreaktionsmittel (28b, 29b) und temperierter Luft (27), wobei die Wärmeaustauschanordnung (20, 21, 22) mit einer Luftquelle (23) am Ausgang für den Rauch aus dem Ofen und mit einer Quelle eines Verbrennungsreaktionsmittels (28a, 29a), ausgewählt aus reichem Oxidationsmittel (28a) und gasförmigem Brennstoff (29a) fluidisch verbunden ist,
∘ wobei die Wärmeaustauschanordnung (20, 21, 22) einen Ausgang für Verbrennungsreaktionsmittel (28b, 29b) darstellt, der fluidisch mit dem Brenner (12) des Schmelzofens (10) verbunden ist, sowie einen Ausgang für temperierte Luft (27), der fluidisch mit der Vernetzungskammer verbunden ist, um die Vernetzung des oder der verklebten Filamente durch Kontakt mit der aus dem Wärmeaustauschanordnung (20, 21, 22) stammenden temperierten Luft (27) zu fördern.

10. Anlage nach Anspruch 9, wobei die Wärmeaustauschanordnung (20, 21, 22) einen Primäraustauscher (20) für den Wärmeaustausch zwischen dem aus dem Ofen (10) evakuierten Rauch und Luft (24) und einen Sekundäraustauscher (21, 22) für den Wärmeaustausch zwischen der aus dem Primäraustauscher (20) stammenden erwärmten Luft (25) und dem Verbrennungsreaktionsmittel (28a, 29a) umfasst.

11. Anlage nach Anspruch 9 oder 10, wobei der Sammler ein Förderband (42) zum Transportieren des oder der gesammelten Filamente in Form einer Glasfaserlage (44) zur Vernetzungskammer (40) hin umfasst.

12. Anlage nach Anspruch 11, wobei der Verkleber (32) stromaufwärts des Förderbands (42) liegt, sodass das Verkleben des oder der Filamente vor ihrem Transport in Form einer Lage (44) durch das Förderband (42) ermöglicht wird.

13. Anlage nach einem der Ansprüche 9 bis 12, wobei das Förderband (42) gasdurchlässig ist und wobei die Vernetzungskammer (40) einen Ansauger oder Ansauger umfasst, um aus der Wärmeaustauschanordnung (20, 21, 22) stammende temperierte Luft (27) durch die Glasfaserlage (44) und das Förderband (42) hindurch in das Innere der Vernetzungskammer (40) anzusaugen.

14. Anlage nach einem der Ansprüche 9 bis 12, umfassend eine der Vernetzungskammer (40) vorgelagerte Formgebungseinheit für die Fertigung von schallisolierenden und/oder wärmeisolierenden und/oder feuerbeständigen Produkten ausgehend von der vernetzten Lage (44).

## Claims

1. Method for manufacturing a fibreglass product wherein melted glass is transformed into a fibreglass product by:
- spinning of the melted glass into at least one thread,
- drawing of the at least one thread into one or more filaments,
- collecting the filament(s),
- bonding of the filament(s) before or after their collection, and
- cross-linking of the bonded collected filament(s),
method wherein the melted glass is produced in a melting furnace (10) heated via combustion of a fuel (28a, 28b) with a rich oxidant (29a, 29b) having an oxygen content of 80% by volume to 100% by volume, with generation of heat and fumes, said generated fumes being removed from the melting furnace (10) at a temperature between 1000°C and 1600°C,
the method being **characterised in that**:
- air (24) is heated via heat exchange with fumes removed in a heat-exchange assembly (20, 21, 22) with the obtaining of hot air (25),
- a reagent (28a, 29a) selected from rich oxidants (29a) and the gaseous fuels (28a) is preheated via heat exchange with the hot air (25) in the heat-exchange assembly (20, 21, 22) with the obtaining of preheated reagent (28b, 29b) and tempered air (27) at a temperature between 200°C and 500°C,
- the preheated reagent (28b, 29b) is used as a combustion reagent in the furnace (10),
- tempered air (27) is used from the heat-exchange assembly (20, 21, 22) during the cross-linking of the bonded collected filament or filaments by putting the collected bonded filament or filaments in contact with the tempered air (27) from the heat-exchange assembly (20, 21, 22) to promote the cross-linking.

2. Method according to claim 1, wherein the heat-exchange assembly comprises a primary exchanger (20) and a secondary exchanger (21, 22), the air (24) being heated via heat exchange with fumes removed from the furnace (10) in the primary exchanger (20) with the obtaining of hot air (25) at a temperature of between 500°C and 800°C and the combustion reagent (28a, 29a) is preheated in the secondary exchanger (21, 22) via heat exchange with the hot air (25) from the primary exchanger (20).

3. Method according to claim 1 or 2, wherein the cross-linking takes place in a cross-linking chamber.

4. Method according to claim 3, wherein the filament(s) are collected in the form of a sheet (44) on a conveyor (42) that conveys the filaments collected in the cross-linking chamber (40).

5. Method according to claim 4, wherein the filaments are bonded before their collection.

6. Method according to claim 4, wherein the filaments are bonded after their collection.

7. Method according to one of claims 4 to 6, wherein the conveyor (42) is permeable to gas, and the tempered air (27) from the secondary exchanger (21, 22) is suctioned through the sheet (44) and the conveyor (42) in the cross-linking chamber (40).

8. Method according to one of claims 1 to 7, wherein the fibreglass product is a nonwoven fabric or an acoustic insulation and/or thermal insulation and/or fire protection product.

9. Facility comprising a glass melting furnace (10) and a transformation unit for transforming melted glass into a fibreglass product:
- the melting furnace (10) comprising a melted glass outlet, a fume outlet and at least one burner (12) for the combustion of a fuel (29a, 29b) with a rich oxidant (28a, 28b) having an oxygen content of 80% by volume to 100% by volume;
- the transformation unit comprising:
- a spinneret for the spinning of the melted glass from the melting furnace (10) into at least one thread, said spinneret being fluidically connected to the melted glass outlet of the furnace (10);
- a drawing device (31, 34) for the drawing of at least one thread from the spinneret into one or more filaments;
- a collector for the collection of the filament(s) from the drawing device (31, 34);
- a bonder (32) for the bonding of the filament(s) with a binder (35) upstream or after the collection, and
- a cross-linking chamber (40) for the cross-linking of the bonded collected filament(s);
the facility being **characterised in that**:
- it comprises a heat-exchange assembly (20, 21, 22) for the heating of the air (24) via heat exchange with fumes removed from the furnace (10) and for the preheating of a combustion reagent (28a, 29a) via heat exchange with the hot air (25) with the obtaining of preheated combustion reagent (28b, 29b) and tempered air (27), the heat-exchange assembly (20, 21, 22) being fluidically connected to a source of air (23), to the fume outlet of the furnace and to a source of a combustion reagent (28a, 29a) selected from between the rich oxidant (28a) and the gaseous fuel (29a),
- the heat-exchange assembly (20, 21, 22) having a preheated combustion reagent (28b, 29b) outlet fluidically connected to the burner (12) of the melting furnace (10) as well as a tempered air (27) outlet fluidically connected to the cross-linking chamber so as to promote the cross-linking of the bonded filament(s) by contact with the tempered air (27) from the heat-exchange assembly (20, 21, 22).

10. Facility according to claim 9, wherein the heat-exchange assembly (20, 21, 22) comprises a primary exchanger (20) for the heat exchange between the fumes removed from the furnace (10) and the air (24) and a secondary exchanger (21, 22) for the heat exchange between the heated air (25) from the primary exchanger (20) and the combustion reagent (28a, 29a).

11. Facility according to claim 9 or 10, wherein the collector comprises a conveyor (42) for transporting the filament(s) collected in the form of a fibreglass sheet (44) to the cross-linking chamber (40).

12. Facility according to claim 11, wherein the bonder (32) is located upstream of the conveyor (42) so as to allow for the bonding of the filament(s) before their transport in the form of a sheet (44) by the conveyor (42).

13. Facility according to any one of claims 9 to 12, wherein the conveyor (42) is permeable to gas and wherein the cross-linking chamber (40) comprises one or more aspirators for suctioning tempered air (27) from the heat-exchange assembly (20, 21, 22) through the fibreglass sheet (44) and the conveyor (42) inside the cross-linking chamber (40).

14. Facility according to any one of claims 9 to 12 comprising a forming unit downstream from the cross-linking chamber (40) for the production of acoustic insulation and/or thermal insulation and/or fire protection products from the cross-linked sheet (44).
